# EUROPEAN PATENT APPLICATION

(11) **EP 3 477 430 A1**
(43) Date of publication of application: **01.05.2019**
(21) Application number: 17199230.8
(22) Date of filing: 30.10.2017
(51) Int. Cl.: G06F 3/01

(54) **AN ELECTRONIC DEVICE AND METHOD FOR GENERATING HAPTIC EFFECTS AT A SCREEN**

(71) Applicant: Vestel Elektronik Sanayi ve Ticaret A.S., 45030 Manisa (TR)
(72) Inventor: KIRISKEN, Barbaros, 45030 Manisa (TR)
(74) Representative: Flint, Adam

(57) **Abstract**

There is provided an electronic device (100) and a method for generating a haptic effect at a screen (102) of the electronic device (100). The electronic device (100) comprises a screen for displaying an image to a user; a sensor configured to detect a user's finger (105) as providing a touch input at the screen (102); a first haptic output device (103A) and a second haptic output device controllable to generate respective first and second haptic effects at the screen (102). The electronic device (100) comprises a processor configured to determine if a user's finger (105) is providing a touch input at the screen. If the user's finger (105) is detected as providing a touch input at the screen (102), the processor causes both the first and second haptic output devices to generate the first and second haptic effects at the screen (102).

## Description

### Technical Field

The present disclosure relates to an electronic device for generating a haptic effect at a screen of the electronic device, and a method for generating a haptic effect at a screen of an electronic device.

### Background

Many types of devices provide a user with haptic feedback. These include for example games controllers and touch-enabled devices. Touch-enabled devices allow a user to interact with the device via a touchscreen. Often, this involves the user selecting different regions of the screen with at least one of their fingers. Some touch-enabled devices make use of haptic effects, such that different regions of the screen provide different types of haptic feedback to the user. One problem with known devices that make use of haptic effects is that the haptic effects are often limited in strength and resolution.

### Summary

According to a first aspect disclosed herein, there is provided an electronic device for generating a haptic effect at a screen of the electronic device, the electronic device comprising: a screen for displaying an image to a user; a sensor configured to detect a user's finger as providing a touch input at the screen; a first haptic output device controllable to generate a first haptic effect at the screen; a second haptic output device controllable to generate a second, different haptic effect at the screen; and a processor operable to communicate with the sensor and the first and second haptic output devices, the processor being configured to: determine based on an input received from the sensor if a user's finger is providing a touch input at the screen; and in response to determining that a user's finger is providing a touch input at the screen, cause both the first and second haptic output devices to generate the first and second haptic effects at the screen.

In an example, the processor is configured to determine a location on the screen that is receiving the touch input from the user's finger; and generate the first and second haptic effects at the determined location on the screen.

In an example, the sensor is capable of detecting at least two of the user's fingers as providing respective touch inputs at different locations on the screen; and the processor is configured to: determine the respective locations on the screen that are receiving the touch inputs from the at least two fingers; and cause the first haptic effect to be generated at a location on the screen corresponding to the location of first of the user's fingers and cause the second haptic effect to be generated at location on the screen corresponding to the location of the second of the user's fingers.

In an example, the processor is configured to cause the first and second haptic effects to be generated at the respective locations on the screen at different respective times.

In an example, the processor is configured to cause the first and second haptic effects to be applied to the screen simultaneously and to control interference occurring between the first and second haptic effects such that the first and second haptic effects are generated at the respective locations on the screen.

In an example, the first haptic output device comprises an ultrasonic actuator.

In an example, the electronic device comprises a transparent conductive surface operable to receive an input from the second haptic output device.

In an example, the electronic device comprises at least two haptic output devices for generating the first haptic effect, the at least two haptic output devices for generating the first haptic effect being coupled to different respective regions of the screen. In an example, the at least two haptic output devices for generating the first haptic effect are coupled to opposing corner regions of the screen.

In an example, the electronic device comprises plural haptic output devices for generating the first haptic effect at different respective locations on the screen and plural haptic output devices for generating the second haptic effect at different respective locations on the screen.

According to a second aspect disclosed herein, there is provided a method for generating a haptic effect at a screen of an electronic device, the method comprising: detecting at least one of the user's fingers as providing a touch input at the screen of the electronic device; and generating a first haptic effect and a second haptic effect at the screen of the electronic device in response to detecting at least one of the user's fingers is providing the touch input at the screen.

In an example, the method comprises determining a location on the screen that is receiving the touch input from the user's finger; and generating the first haptic effect and the second haptic effect at the determined location on the screen.

In an example, the method comprises detecting at least two of the user's fingers as providing touch inputs at different respective locations on the screen; and generating a first haptic effect and a second haptic effect at the different respective locations on the screen.

In an example, generating the first haptic effect comprises decreasing a coefficient of friction between a user's finger and the screen, and generating the second haptic effect comprises increases a coefficient of friction between a user's finger and the screen.

### Brief Description of the Drawings

To assist understanding of the present disclosure and to show how embodiments may be put into effect, reference is made by way of example to the accompanying drawings in which:
Figure 1A shows schematically a side view of an example of an electronic device for generating haptic effects;
Figure 1B shows schematically a top down view of an example of an electronic device for generating haptic effects;
Figure 2A shows schematically an example of an electronic device receiving a touch input from one of a user's fingers;
Figure 2B shows schematically the coefficient of friction experienced by one of the user's fingers, as the user drags their finger across the screen; and
Figure 3 shows schematically an example of an electronic device receiving a touch input from at least two of the user's fingers, and how the coefficient of friction perceived by each finger varies.

### Detailed Description

Many different types of electronic devices provide a user with haptic feedback. These include for example, games controllers which may vibrate in response to a user performing certain actions within a game. Some electronic devices provide a user with haptic feedback by way of a touchscreen. This involves, for example, controlling a vibration of the screen such that the user experiences different textures when interacting with the screen. Electronic devices that employ touchscreens may include e.g. smartphones, tablets, laptops, personal computers, television monitors, etc.

In some electronic devices, the haptic effect may correspond to a change in the coefficient of friction that is perceived by the user as they move their finger across the surface of the screen. Depending on how the friction is varied, the user may perceive a feature at the touchscreen that would not otherwise be perceived if the surface friction were not varied. For example, the friction may be varied so that the user perceives a bump, border, or other obstacle corresponding to an edge of a feature, such as a virtual button, slider, knob, etc. In some examples, the friction may be varied so that the user perceives a region of the screen as having a particular texture, such as the texture of a known material.

In existing electronic devices that generate haptic effects, the types of haptic effects that can be generated often provide limited haptic feedback to the user. Moreover, in existing devices that employ touchscreens, the types of haptic effect that can be generated tend to be the same for each of the user's fingers interacting with the touchscreen. This results in a sub-optimal user experience for the user interacting with the electronic device.

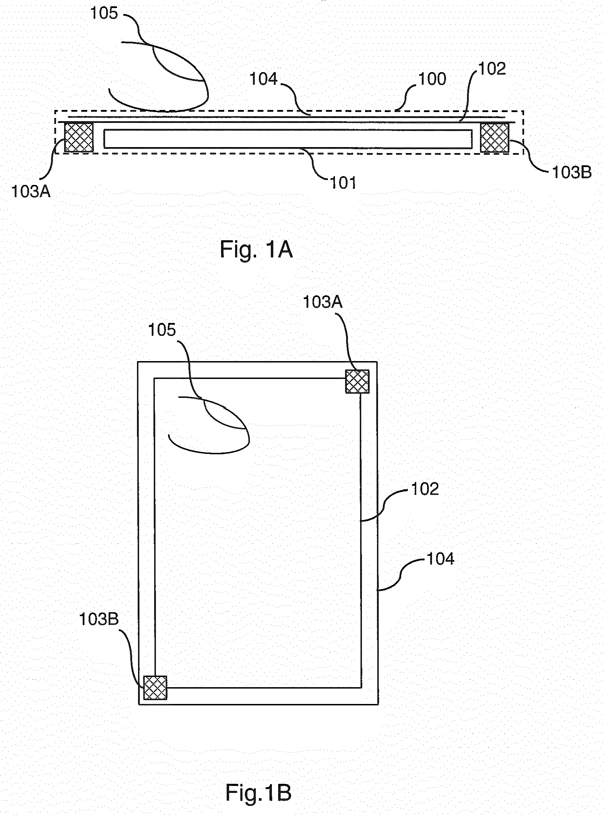

Figure 1A schematically shows a side view of an example of an electronic device 100 in accordance with the present disclosure. Figure 1B schematically shows a top-down view of the same electronic device 100. The electronic device 100 includes a display element 101 for generating an image at a screen 102 of the electronic device 100. The electronic device 100 comprises a plurality of light sources for generating the pixels of an image. The light sources may be controllable, and / or may be associated with controllable filters. The display element 101 may correspond, for example, to a liquid crystal display (LCD), organic light-emitting diode (OLED) display, a quantum-dot LED (QLED), micro-LED display, etc.

In some examples, the screen 102 comprises a touchscreen 102 that is positioned in front of the display element 101. The term touchscreen 102 is used herein to describe the part of the electronic device 100 that is arranged to receive and detect a touch input at the screen of the electronic device 100. The term touchscreen 102 is also used herein to describe the part of the electronic device 100 through which a user is able to experience haptic feedback.

The touchscreen 102 employs one or more sensors (not shown) for detecting a touch input at a particular location on the screen. The one or more sensors may correspond for example to optical sensors, resistive sensors, capacitive sensors, etc. The touchscreen 102 may employ a plurality of sensors of the same type or of different types. Generally, the type of sensor(s) used will depend on the technology used for detecting a touch input. In some examples, the touchscreen 102 may correspond to a resistive touchscreen, a surface acoustic wave (SAW) touchscreen, capacitive touchscreen, an infra-red touchscreen, an optical touchscreen. In some examples, the touchscreen 102 may employ dispersive signal technology and acoustic pulse recognition technology in order to detect a touch input as being received at the touchscreen. The one or more sensors may therefore correspond to the one or more sensors that are typically used for such touchscreen technologies.

The one or more sensors allow a single touch input or multiple touch inputs at the screen to be detected at the touchscreen 102. In some examples, the one or more sensors are configured to provide their respective outputs to one or more processors. The one or more processors are configured to determine the number of touch inputs that are being received at the screen 102 and their respective locations on the screen 102. In some examples, the one or more processors are configured to detect more complex motions, such as dragging, swiping, pinching etc. Generally, the one or more sensors allow the position of at least one of the user's fingers to be tracked as it moves across the touchscreen 102. In some examples, the one or more sensors allow the position of at least two of the user's fingers to be tracked, as they move across different locations on the screen 102. The one or more processors may form part of a controller (described later), and may be configured to execute computer program instructions stored in memory at the electronic device 100. The computer program instructions may define the one or more operations that are to be executed by the controller.

The touchscreen 102 may be made of glass, for example. In the example shown in Figure 1A, the touchscreen 102 is shown as being located in front of the display element 101 but behind a transparent conductive surface 104 (described later). Although shown as being separated from the screen 102, in some examples, the transparent conductive surface may form part of the screen 102 itself. For example, the conductive surface may be deposited on top of the screen 102.

The electronic device 100 also comprises a first haptic output device 103A configured to generate a first haptic effect at the touchscreen 102 of the electronic device 100. The first haptic output device 103A may comprise for example an actuator, such as an ultrasonic actuator. The first haptic output device 103A is configured to output the first haptic effect to the touchscreen 102. This may be achieved for example as a result of the first haptic output device 103A being in physical contact with the touchscreen 102. The output of the first haptic device 103A causes a user interacting with the touchscreen 102 to perceive the touchscreen 102 as having a lower coefficient of friction, relative to when the first haptic effect is not being generated at the touchscreen 102. The output of the first haptic output device 103A may be such that the first haptic effect is only perceptible at certain locations on the touchscreen 102. For example, the first haptic effect may only be perceptible at an isolated region of the touchscreen 102.

The first haptic output device 103A is sometimes referred to herein as a haptic output device of the first type. In some examples, the electronic device 100 may comprise a plurality of haptic output devices of the first type. In some examples, the electronic device 100 comprises at least two haptic output devices of the first type. In the example shown in Figure 1A, the electronic device comprises two haptic output devices of the first type 103A, 103B. The haptic output devices of the first type may be coupled to different regions of the touchscreen 102. In some examples, the haptic output devices of the first type are coupled to different respective locations of the edge of the touchscreen 102. In one example, there are two haptic output devices of the first type 103A, 103B which are coupled to opposing corners of the touchscreen 102. This example is shown in Figure 1B.

The electronic device 100 also comprises a second haptic output device (i.e. a haptic output device of a second type) for generating a second haptic effect at the touchscreen 102. The second haptic effect is different from the first haptic effect. For example, the second haptic effect may cause a user interacting with the surface of the touchscreen 102 to perceive the screen 102 as having an increased coefficient of friction, relative to when the second haptic effect is not being generated at the touchscreen 102. This may achieved for example, by means of electrovibration. The touchscreen 102 may include a transparent conductive surface 104 that is arranged to receive an input from the second haptic output device. In some examples, the second haptic output device may be configured to output a time-varying voltage to the conductive surface, or a particular region of the conductive surface. The conductive surface may be covered with a thin (but transparent) insulating layer. The second haptic output device may have a controllable voltage output such that the relative increase in friction experienced by a user, as they drag their finger across the insulating layer, can be varied. This technique is sometimes referred to in the art as electrostatic loading.

In some examples the electronic device 100 may employ a plurality of haptic output devices of the second type. Each of the plural haptic output devices of the second type may have a controllable output voltage. That is, the voltage output by each of the haptic devices of the second type may be varied collectively or individually. In most examples, the electronic device 100 comprises at least one haptic device of the first type and at least one haptic device of the second type.

The haptic output devices of the first and second types may be coupled to a controller (not shown). The controller is also coupled to the one or more sensors of the touchscreen 102. The controller is configured to control the output of the haptic output devices of the first and second types, based on an input received from the one or more sensors. The controller may be configured to determine one or more locations on the screen 102 that are receiving a touch input and to cause the first haptic effect and / or second haptic effect to be generated at the corresponding location(s) on the screen 102. This may involve identifying a haptic output device of the first type and / or the second type that is coupled to a region of the screen 102 that corresponds to the location at which the touch input was or is being received. In some examples, the controller may be configured to control the times at which the different haptic effects are generated at the screen.

Alternatively or additionally, the controller may be configured to control or even make use of interference that may occur or arise between the first and second haptic effects when both haptic effects are applied to the screen 102 simultaneously. In some examples, the first and second haptic effects may be generated using techniques that are in essence or substantially independent. For example, referring to the specific examples above, ultrasonic vibration is in essence a mechanical technique for changing the surface friction and electrovibration is in essence an electrical technique for changing the surface friction. Therefore interference between the mechanical and electrical effects is likely to be limited. However, when both techniques are applied to the whole screen 102, it may be beneficial to control the interference occurring between the two different haptic effects. In a particular example, destructive interference may be employed between the haptic defects to assist in localising each haptic effect to a different region of the screen. This may involve for example, identifying a first haptic output device 103A and a second haptic output device (of different types) having spatial locations that will generate a desired interference pattern when both haptic effects are generated at the screen 102 simultaneously. In Figures 1A and 1B the touch input is shown as being provided by a user's finger 105.

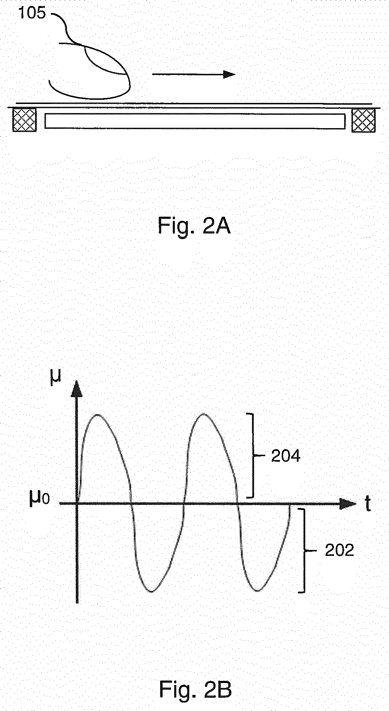

Figure 2A schematically shows an electronic device 100 with a user dragging one of their fingers 105 across the screen. In Figure 2A, the user is dragging the finger 105 from left to right. The electronic device 100 shown in Figure 2A corresponds to the electronic device 100 shown in Figures 1A and 1B.

Figure 2B shows an example of how the coefficient of friction µ of the surface of the screen, may be varied with time, as the user drags their finger 105 across the screen in the manner shown in Figure 2A. In Figure 2B, the y-axis represents the coefficient of friction that the user's finger 105 will perceive and the x-axis represents time.

In Figure 2B, the normal level of friction that a user would experience when interacting with the screen is indicated as having a value of µ₀. This corresponds to the friction that a user would experience when neither the first or second haptic effect is being generated at the screen of the electronic device 100. In Figure 2B, decreases in the coefficient of friction correspond to times at which the first haptic effect is being generated at the screen, and increases in the coefficient correspond to times at which the second haptic effect is being generated at the screen. The first and second haptic effects may be generated as described previously. For example, the friction of the screen may be increased via electrovibration while the friction of the screen may be decreased via ultrasonic vibration.

As can be seen in Figure 2B, by making use of the first and second haptic effects, the coefficient of friction perceived by the user can be varied to a greater degree. This in turn allows the user to experience stronger and/or more varied touch sensations when interacting with screen. For example, the use of the first and second haptic effects may allow a user to perceive a greater degree of surface variation on the screen and across the screen as the finger(s) move(s).

In one example of the present disclosure, when one of the user's fingers 105 is detected as providing a touch input at the screen, both the first and second haptic effects are generated at the screen. This is achieved using at least one haptic output device of the first type and at least one haptic output device of the second type, as described previously. In some examples, this involves generating the first haptic effect and the second haptic effect at the screen simultaneously. For example, the first haptic effect may be generated at a first location of the screen, and the second haptic effect generated at a second, different location of the screen. As the user drags their finger 105 across the screen, the user may experience the different haptic effects at the different respective locations on the screen. In some examples, the first and second haptic effects may be generated at the same locations on the screen, but the individual contribution of each haptic effect may be varied at different locations on the screen. As the user drags their finger 105 across the screen, the user may therefore experience greater or less contributions of each haptic effect.

In other examples, the first haptic effect and second haptic effect may be generated at the screen at alternate times. For example, a controller may be configured to control the times at which one or more haptic output devices of the first and second types provide their respective outputs to the touchscreen. This controller may correspond to the controller described previously. The controller may be configured to track motion of the user's finger 105, and based on this, control the times at which the first and second haptic effects are generated. The first haptic effect may be generated so as to coincide with a time at which the user's finger 105 is expected to be at a first location and the second haptic effect may be generated so as to coincide with time at which the user's finger 105 is expected to be at a second, different location.

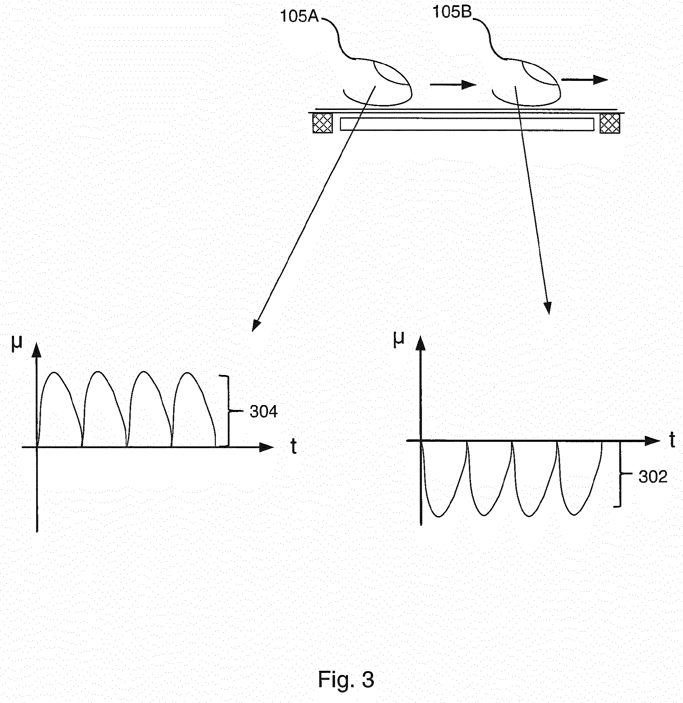

Figure 3 schematically shows an electronic device 100 with a user dragging two of their fingers 105A, 105B across the screen and how the coefficient perceived by each finger varies as a function of time (and also position on the screen). In the example shown in Figure 3, one of the user's fingers 105A is providing a touch input at a first location on the screen, and another one of the user's fingers 105B is providing a touch input at a different location on the screen. In Figure 3, both of the user's fingers are being moved from in the left to right direction.

In the present disclosure, when at least two of the user's fingers 105A, 105B are being dragged across the screen, the first haptic effect is generated at the location on the screen receiving a touch input from a user's first finger 105A and the second haptic effect is generated at the location of the screen that is receiving a touch input from a user's second finger 105B (or vice versa). In the example shown in Figure 3, the first haptic effect is localized to finger 105B while the second haptic effect is localized to finger 105A. As the user drags their first and second finger across the screen, each finger receives the first and second haptic effect respectively (or vice versa).

As can be seen in Figure 3, finger 105A perceives the screen as having a coefficient of friction that varies between an average value and a value that is higher than the average value. Meanwhile, finger 105B perceives the screen as having a coefficient of friction that varies between the average value and a value that is lower than the average value. The overall effect of this is that finger 105A experiences greater friction than finger 105B as the two fingers 105A, 105B are dragged across the screen. The contribution from at least one haptic output device of the first type is indicated at 304, whilst the contribution from at least one haptic output device of the second type is indicated at 302. As before, the x- and y-axes correspond to the coefficient of friction and time respectively.

It will be appreciated that if both the first haptic effect and second haptic effect are to be generated at the screen, it may be beneficial to control the level of any destructive interference that may occur between the effects. This may be done by generating the first haptic effect and second haptic effect at different respective time intervals. For example, the controller (described previously) may be configured to sample the first and second haptic effects one by one, or to control or even use the level of destructive interference occurring between them when both effects are applied simultaneously. The effect of this is that each finger experiences a reduced touch sensation (compared with when only one finger provides a touch input), but that the overall touch sensation experienced by each finger is still improved.

In some examples, the electronic device 100 may comprise a plurality of haptic output devices of the first and second types. The haptic output devices of the first type may be arranged in for example, a grid, such that each haptic output device generates the first haptic effect at different respective region of the screen. Similarly, the haptic output devices of the second type may also be arranged in e.g. a grid such that each haptic output device generates the second haptic effect a different respective region of the screen. The controller may be configured to identify one or more of the haptic output devices of the first type that coincide with the location of the user's first (or second) finger on the screen. Similarly, the controller may be configured to identify one or more of the haptic output devices of the second type that coincide with the location of the user's second finger (or first finger) on the screen. The controller may then cause the one or more haptic output devices of the first (or second) type to generate their respective haptic effects at the location on the screen corresponding to the user's first (or second) finger. Alternatively, the controller may cause the one or more haptic output devices of the first (or second) type to generate their respective effects at the location on the screen corresponding the location of the user's second (or first) finger.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to memory for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An electronic device for generating a haptic effect at a screen of the electronic device, the electronic device comprising:
a screen for displaying an image to a user;
a sensor configured to detect a user's finger as providing a touch input at the screen;
a first haptic output device controllable to generate a first haptic effect at the screen;
a second haptic output device controllable to generate a second, different haptic effect at the screen; and
a processor operable to communicate with the sensor and the first and second haptic output devices, the processor being configured to:
determine based on an input received from the sensor if a user's finger is providing a touch input at the screen; and
in response to determining that a user's finger is providing a touch input at the screen, cause both the first and second haptic output devices to generate the first and second haptic effects at the screen.

2. An electronic device according to claim 1, wherein the processor is configured to:
determine a location on the screen that is receiving the touch input from the user's finger; and
generate the first and second haptic effects at the determined location on the screen.

3. An electronic device according to claim 1 or claim 2, wherein the sensor is capable of detecting at least two of the user's fingers as providing respective touch inputs at different locations on the screen; and
the processor is configured to:
determine the respective locations on the screen that are receiving the touch inputs from the at least two fingers; and
cause the first haptic effect to be generated at a location on the screen corresponding to the location of first of the user's fingers and cause the second haptic effect to be generated at location on the screen corresponding to the location of the second of the user's fingers.

4. An electronic device according to claim 3, wherein the processor is configured to cause the first and second haptic effects to be generated at the respective locations on the screen at different respective times.

5. An electronic device according to claim 3 or claim 4, wherein the processor is configured to cause the first and second haptic effects to be applied to the screen simultaneously and to control interference occurring between the first and second haptic effects such that the first and second haptic effects are generated at the respective locations on the screen.

6. An electronic device according to any of claims 1 to 5, wherein the first haptic output device comprises an ultrasonic actuator.

7. An electronic device according to any of claims 1 to 6, wherein the second haptic output device comprises an electrostatic actuator.

8. An electronic device according to claim 7, wherein the electronic device comprises a transparent conductive surface operable to receive an input from the second haptic output device.

9. An electronic device according to any of claims 1 to 7, comprising at least two haptic output devices for generating the first haptic effect, the at least two haptic output devices for generating the first haptic effect being coupled to different respective regions of the screen.

10. An electronic device according to claim 8, wherein the at least two haptic output devices for generating the first haptic effect are coupled to opposing corner regions of the screen.

11. An electronic device according to any of claims 1 to 8, wherein the electronic device comprises plural haptic output devices for generating the first haptic effect at different respective locations on the screen and plural haptic output devices for generating the second haptic effect at different respective locations on the screen.

12. A method for generating a haptic effect at a screen of an electronic device, the method comprising:
detecting at least one of the user's fingers as providing a touch input at the screen of the electronic device; and
generating a first haptic effect and a second haptic effect at the screen of the electronic device in response to detecting at least one of the user's fingers is providing the touch input at the screen.

13. A method according to claim 12, comprising determining a location on the screen that is receiving the touch input from the user's finger; and
generating the first haptic effect and the second haptic effect at the determined location on the screen.

14. A method according to claim 12 or claim 13, comprising:
detecting at least two of the user's fingers as providing touch inputs at different respective locations on the screen; and
generating a first haptic effect and a second haptic effect at the different respective locations on the screen.

15. A method according to any of claims 12 to 14, wherein generating the first haptic effect comprises decreasing a coefficient of friction between a user's finger and the screen, and generating the second haptic effect comprises increases a coefficient of friction between a user's finger and the screen.
